# EUROPEAN PATENT APPLICATION

(11) **EP 3 511 427 A1**
(43) Date of publication of application: **17.07.2019**
(21) Application number: 17849046.2
(22) Date of filing: 04.09.2017
(51) Int. Cl.: C21C 7/04, C21C 7/00, C21C 7/10

(54) **BLOCKING MATERIAL AND METHOD FOR PRODUCING ALLOY STEEL USING SAME**

(30) Priority: 12.09.2016 KR 20160117208
(71) Applicant: Posco, Pohang-si, Gyeongsangbuk-do 37859 (KR)
(72) Inventor: SONG, Min Ho, Gwangyang-si Jeollanam-do 57773 (KR)
(74) Representative: Zech, Stefan Markus
(86) International application number: PCT/KR2017/009665
(87) International publication number: WO 2018/048162

(57) **Abstract**

The present disclosure relates to a blocking material and a method for manufacturing alloy steel using the same. In maintaining a molten ferro alloy, used when manufacturing a manganese-containing alloy steel, at a temperature of at least a melting point of the ferro alloy, a blocking material layer is formed on the melt surface of the molten ferro alloy by using a blocking material which includes, with respect to the total of 100 wt%, 37-66 wt% of CaO and SiO₂, 8-15 wt% of Al₂O₃, 6-18 wt% of MgO, and 20-30 wt% of MnO, wherein the ratio of CaO to SiO₂ (CaO/SiO₂) is in a range of 0.95-1.2. Thus, nitrogen in the air may be prevented from being mixed into the molten ferro alloy.

## Description

### TECHNICAL FIELD

The present disclosure herein relates to a blocking material and a method for manufacturing alloy steel using the same, and more particularly, to a blocking material which is capable of suppressing contamination of alloy steel caused by nitrogen penetration while manufacturing the alloy steel, and a method for manufacturing alloy steel using the blocking material.

### BACKGROUND ART

In general, high manganese steel means steel containing approximately 1-5 wt% of manganese. Recently, high functional products such as high-strength high-formability steel materials for vehicle have been developed, and high-manganese steel having an increased manganese content of approximately 24 wt% is being manufactured.

The high-manganese steel is manufactured in such a way that while tapping molten steel after completing converter refining, a manganese-containing metal or alloy (hereinafter, referred to as ferro alloy) is added to control the manganese concentration. At this point, when the amount of ferro alloy added into the molten steel increases, the heat amount required for melting the ferro alloy increases, and the required heat amount may be secured by raising the converter end point temperature of the molten steel.

However, when raising the converter end point temperature of molten steel, the blowing amount of oxygen increases and the oxygen concentration in the molten steel thereby increases. Therefore, a limitation occurs in that a decrease in yield due to oxidation of the molten steel and refractory material of a converter is eroded due to the high-temperature of the molten steel. Furthermore, there is a limitation in that due to a high dissolved oxygen concentration in the molten steel, the added amount of deoxidizer is increased, and the amount of slag thereby increases. Furthermore, there is a limitation in that an amount of atmospheric oxidation generation increases due to a high temperature of the molten steel when adding the ferro alloy, and thereby causes a decrease in yield.

In order to solve such limitations, various methods are being attempted, and among these, a method is being applied in which the temperature of the molten steel is raised, after converter tapping, through a second refining process such as a ladle furnace (LF), vacuum refining (Rheinstahl and Heraeus: RH), etc., and a ferro alloy is further added to correct the concentration of the ferro alloy in the molten steel. However, there is difficulty in mass production of cast slabs because the added amount of ferro alloy is limited due to the limit of capacity of correcting temperatures for unit time in the second refining, a long processing time is required, and there is a limit in increasing the number of continuous-continuous casting. Furthermore, there is a limitation in that an increase in the processing time in a steelmaking process causes an increase in unit production cost.

Thus, recently, a technique of manufacturing a high-manganese steel is being applied in which molten ferro alloy obtained by melting ferro alloy is prepared, and the molten ferro alloy is mixed molten steel. This technique uses a molten ferro alloy and hence has a merit in that high-manganese steel may be manufactured without securing a heat source required for melting a solid ferro alloy. However, during the time for manufacturing the molten ferro alloy and mixing, a nitrogen absorption phenomenon occurs due to contact with the air, and thus, the nitrogen content in the molten ferro alloy excessively increases. Therefore, there is a limitation in that an additional process is required for controlling the nitrogen content in the molten ferro alloy or in the high-manganese steel manufactured through mixing, and hence causes an increase in processing time and an additional cost.

### (Related art documents)

Korean Patent No. 1029558
Korean Patent No. 0229910
Korean Patent No. 1048981
Korean Patent No. 1047912

### DISCLOSURE OF THE INVENTION

### TECHNICAL PROBLEM

The present disclosure provides a blocking material capable of ensuring cleanliness of alloy steel and a method for manufacturing alloy steel using the same.

### TECHNICAL SOLUTION

In accordance with an exemplary embodiment, a blocking material, which is added to a melt surface of a manganese-containing molten ferro alloy and covers the melt surface of the molten ferro alloy, includes: with respect to a total of 100 wt%, 37-66 wt% of CaO and SiO₂, 8-15 wt% of Al₂O₃, 6-18 wt% of MgO, and 20-30 wt% of MnO, wherein CaO and SiO₂ are included so that the ratio of CaO to SiO₂ (CaO/SiO₂) is in a range of 0.95-1.2.

In accordance with another exemplary embodiment, a method for manufacturing alloy steel includes: preparing a molten ferro alloy; preparing a blocking material; adding the blocking material into the molten ferro alloy and forming a blocking material layer on a melt surface of the molten ferro alloy; maintaining the molten ferro alloy at a temperature of at least a melting point of the ferro alloy; and mixing the molten ferro alloy and the molten steel to manufacture alloy steel.

The preparing of the molten ferro alloy may include: melting a ferro alloy in a melting furnace to manufacture the molten ferro alloy; and pouring the molten ferro alloy into a temperature holding furnace.

The preparing the molten ferro alloy may include: charging molten steel into a temperature holding furnace; and adding at least any one of a ferro alloy or a molten ferro alloy into the temperature holding furnace.

In the preparing of a blocking material, the blocking material may be prepared which includes, with respect to a total of 100 wt%, 37-66 wt% of CaO and SiO₂, 8-15 wt% of Al₂O₃, 6-18 wt% of MgO, and 20-30 wt% of MnO, wherein the ratio of CaO to SiO₂ (CaO/SiO₂) may be in a range of 0.95-1.2.

The blocking material may be added in any one state of a solid phase or a liquid phase.

The maintaining the molten ferro alloy at a temperature of at least a melting point of the ferro alloy may be performed in a range of 1,450-1,550°C.

In the forming of a blocking material layer on a melt surface of the molten ferro alloy, the blocking material layer may be formed on an entirety of the melt surface of the molten ferro alloy so that nitrogen in the air may be prevented from being mixed into the molten ferro alloy due to contact between the molten ferro alloy and the air.

### ADVANTAGEOUS EFFECTS

According to an exemplary embodiment, contamination of a molten ferro alloy used when manufacturing alloy steel may be suppressed. In a method for manufacturing alloy steel by mixing a molten ferro alloy and a molten steel, maintaining and storing the molten ferro alloy in a temperature holding furnace at a temperature of at least the melting point of the ferro alloy for a certain time. Here, in the maintaining and storing of the molten ferro alloy, a blocking material layer which may prevent contact with the air is formed on the melt surface of the molten ferro alloy, and thus, contamination caused by contact with the air, for example, nitrogen absorption may be suppressed or prevented.

Thus, cleanliness of alloy steel is secured, a post-process may be omitted or the time spent for the post-process may be reduced, and thus the productivity of the alloy steel may be improved. Accordingly, the alloy steel required for casing may smoothly be supplied, and thus, the casting efficiency may also be improved.

### BRIEF DESCRIPTION OF THE DRAWINGS

FIG. 1 is a flow chart sequentially illustrating a method for manufacturing alloy steel in accordance with an exemplary embodiment.
FIG. 2 is a graph illustrating a change in the solubility of a refractory (MgO) according to a change in the concentration of MnO contained in a blocking material in accordance with an exemplary embodiment.
FIG. 3 is a graph illustrating a change in the solubility of a refractory (MgO) according to a change in the concentration of Al₂O₃ contained in a blocking material in accordance with an exemplary embodiment.
FIG. 4 is a graph illustrating a change in the nitrogen concentration in a molten ferro alloy according to whether to use a blocking material in accordance with an exemplary embodiment.
FIG. 5 is a graph illustrating an experimental result for verifying a nitrogen absorption prevention effect of a blocking material in a method for manufacturing alloy steel in accordance with an exemplary embodiment.

### MODE FOR CARRYING OUT THE INVENTION

Hereinafter, exemplary embodiments will be described in detail. The present disclosure may, however, be embodied in different forms and should not be construed as limited to the embodiments set forth herein. Rather, these embodiments are provided so that this disclosure will be thorough and complete, and will fully convey the scope of the present disclosure to those skilled in the art.

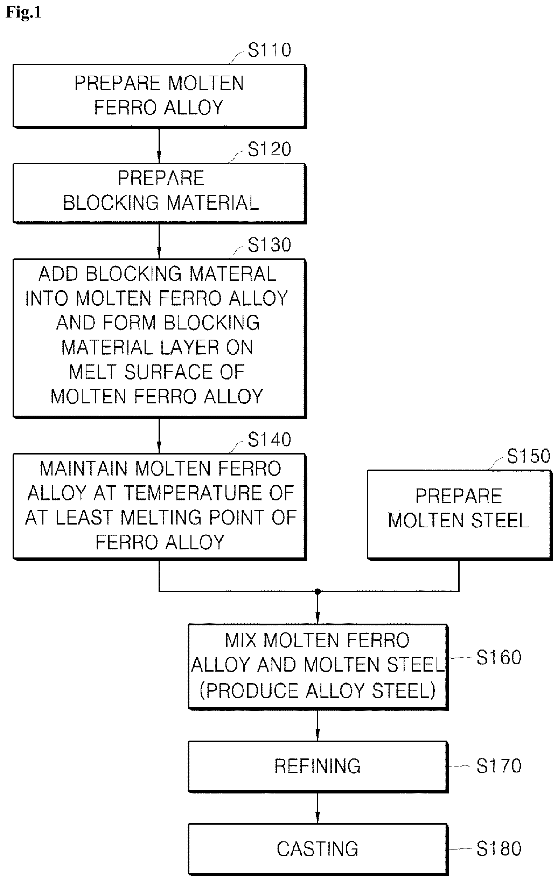

FIG. 1 is a flow chart sequentially illustrating a method for manufacturing alloy steel in accordance with an exemplary embodiment.

Firstly, a method for manufacturing alloy steel in accordance with an exemplary embodiment relates to a method for manufacturing a manganese-containing alloy steel, and more particularly to, a method for manufacturing alloy steel by mixing a molten ferro alloy, in which at least one of a manganese metal or a manganese alloy is melted, and a molten steel. At this point, the molten ferro alloy may be maintained in a temperature holding furnace at a temperature of at least the melting point of the ferro alloy before mixed with the molten steel. In addition, while maintaining the molten ferro alloy in the temperature holding furnace, a blocking material layer is formed on the melt surface of the molten ferro alloy, so that a nitrogen absorption phenomenon may be suppressed or prevented in which the molten ferro alloy contacts the air and contamination, for example, nitrogen content in the air is mixed.

Referring to FIG. 1, a method for manufacturing alloy steel in accordance with an exemplary embodiment may include: preparing a molten ferro alloy (S110); preparing a blocking material (S120); adding a blocking material into the molten ferro alloy and forming a blocking material layer on a melt surface of the molten ferro alloy (S130); maintaining the molten ferro alloy at a temperature of at least the melting point of the ferro alloy (S140); preparing a molten steel (S150); and mixing the molten ferro alloy and the molten steel to manufacture alloy steel (S160). In addition, after manufacturing the alloy steel, refining impurities (S170) and casting a cast article using the completely refined alloy steel (S180) may be included.

The preparing of the molten ferro alloy is a step in which for example, a solid manganese metal or a manganese alloy (hereinafter, referred to as a ferro alloy) is melted to be manufactured into a high-temperature molten metal or a high-temperature molten ferro alloy (hereinafter, referred to as a molten ferro alloy). The molten ferro alloy may be manufactured through various methods, and may be manufactured by melting, for example, a solid ferro alloy in a melting furnace such as an electric furnace.

Alternatively, in the preparing of the molten ferro alloy, the molten ferro alloy may be manufactured by charging a high-temperature molten steel into a temperature holding furnace, and adding and melting a ferro alloy, or adding and mixing the molten ferro alloy. At this point, the ferro alloy and the molten ferro alloy may also be added together. In this case, the molten steel may be different from the molten steel mixed with the molten ferro alloy to manufacture a ferro alloy. When manufacturing a molten ferro alloy in such a method, it is possible to maintain an alloy component, such as the manganese content, in the molten ferro alloy to be higher than the iron content by adding a greater amount of the ferro alloy and the molten ferro alloy than the pre-charged molten steel in the temperature holding furnace.

The ferro alloy manufactured as such may be charged into a temperature holding furnace shielded from the outside and be maintained at a temperature of the melting point thereof until being mixed with molten steel. As such, the molten ferro alloy is stored in the temperature holding furnace until mixed with molten steel, and the ferro alloy may contact the air present inside the temperature holding furnace, for example, the air present before charging the ferro alloy or the air introduced when charging the ferro alloy into the temperature holding furnace. Accordingly, there is a limitation in that nitrogen in the air is mixed into the molten ferro alloy and the nitrogen content in the molten ferro alloy increases.

Thus, in the exemplary embodiment, while storing and maintaining the molten ferro alloy in the temperature holding furnace, a blocking layer is formed on the melt surface of the ferro alloy, so that the occurrence of a nitrogen absorption phenomenon caused by contact between the molten ferro alloy and the air may be prevented.

The blocking material may be maintained at a liquid phase while maintaining the molten ferro alloy in the temperature holding furnace, and may have a composition which may maximally suppress a reaction with refractory constituting the temperature holding furnace.

Accordingly, the blocking material may be prepared so as to include, with respect to a total of 100 wt%, 37-66 wt% of CaO and SiO₂, 8-15 wt% of Al₂O₃, 6-18 wt% of MgO, and 20-30 wt% of MnO, and CaO and SiO₂ may be included so that the ratio of CaO to SiO₂ (CaO/SiO₂) is 0.95-1.2. Here, CaO, SiO₂, and MgO may be used to control the melting point of the blocking material, and Al₂O₃ and MnO may be used to reduce refractory erosion of the temperature holding furnace. Such the composition of the blocking material will be described later again

The blocking material may be provided in a solid phase, for example, in a powder state, or a liquid phase, and when added into the temperature holding furnace in a solid phase, the temperature of the molten ferro alloy may decrease, and hence a heat source for melting the blocking material may be provided in the temperature holding furnace.

The blocking material may be added in an amount of such a degree that covers the entirety of the melt surface of the molten ferro alloy in the temperature holding furnace. That is, the blocking material is added into the temperature holding furnace and forms a blocking layer on the melt surface of the molten ferro alloy, and at this point, the blocking material layer may cover the entirety of the melt surface and thereby block the molten ferro alloy from contacting the air inside the temperature holding furnace. Accordingly, the molten ferro alloy may be suppressed or prevented from contacting the air and being mixed with nitrogen in the air.

While the blocking material layer is formed on the melt surface of the ferro alloy, the molten ferro alloy may be maintained at a temperature of at least the melting point thereof, for example, 1450-1550 □.

In the preparing of molten steel, the molten steel may be manufactured according to required conditions by adding pig iron manufactured in a blast furnace into a converter and performing processes such as blow refining and dephosphorization. In addition, when the molten steel is manufactured, the molten steel may be tapped into a ladle, and be moved to a place for mixing with the molten ferro alloy. Alternatively, the temperature holding furnace which stores the molten ferro alloy may also be moved to the place for mixing with the molten steel.

When the molten steel is prepared, the molten ferro alloy stored in the temperature holding furnace may be tapped to the molten steel and be mixed, and thus, alloy steel may be manufactured. At this point, while tapped to the molten steel, the molten ferro alloy is naturally mixed with the molten steel, but if necessary, the molten steel may also be stirred and uniformly mixed with the ferro alloy.

When the alloy steel is manufactured, in order to control the temperature and the component of the alloy steel, any one refining process of the ladle furnace (LF) process or a vacuum degassing process may be performed. At this point, in the vacuum degassing process, a dentrification treatment for removing nitrogen contained in the alloy steel by refluxing the alloy steel may be performed.

Subsequently, the alloy steel is move to casting equipment and a casting process for casing a cast slab or the like may be performed.

Hereinafter, a blocking material used in a method for manufacturing alloy steel in accordance with an exemplary embodiment will be described.

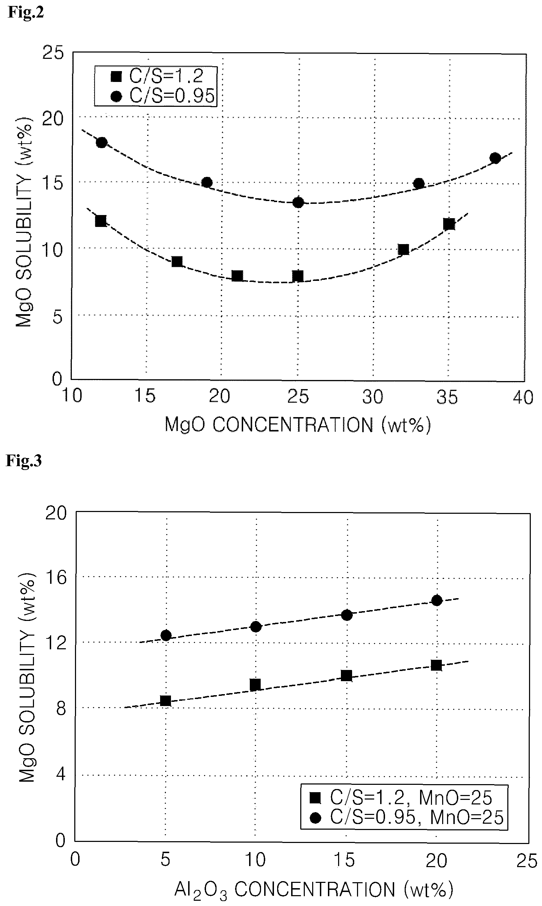

FIG. 2 is a graph illustrating a change in the solubility of a refractory (MgO) according to a change in the concentration of MnO contained in a blocking material in accordance with an exemplary embodiment, and FIG. 3 is a graph illustrating a change in the solubility of a refractory (MgO) according to a change in the concentration of Al₂O₃ contained in a blocking material in accordance with an exemplary embodiment.

The blocking material may prevent nitrogen from being mixed into the molten ferro alloy in such a way that a blocking material is formed on the melt surface of the molten ferro alloy inside the temperature holding furnace to prevent the molten ferro alloy from contacting the atmosphere, that is, the air. At this point, favorably, the blocking material maintains a liquid phase inside the temperature holding furnace, and is manufactured of components which may minimize reactions with the refractory of the temperature holding furnace.

As described above, the blocking material may be prepared so as to include, with respect to a total of 100 wt%, 37-66 wt% of CaO and SiO₂, 8-15 wt% of Al₂O₃, 6-18 wt% of MgO, and 20-30 wt% of MnO, and CaO and SiO₂ may be included so that the ratio of CaO to SiO₂ (CaO/SiO₂) is 0.95-1.2.

The blocking material may prevent nitrogen from being mixed into the molten ferro alloy in such a way that the blocking material is formed on the melt surface of the molten ferro alloy inside the temperature holding furnace to prevent the molten ferro alloy from contacting the atmosphere, that is, the air. At this point, favorably, the blocking material maintains a liquid phase inside the temperature holding furnace, and is manufactured of components which may minimize reactions with the refractory of the temperature holding furnace.

Accordingly, in order to control the melting point of the blocking material, the ratio of CaO to SiO₂, that is, the basicity (CaO/SiO₂) may be adjusted to 0.95-1.2. When the basicity of the blocking material is smaller or larger than the presented range, there is a limitation in that while maintaining the molten ferro alloy in the temperature holding furnace, the blocking material may not easily maintain a liquid phase.

In addition, in the blocking material, MnO and Al₂O₃ takes part in suppressing the erosion of refractory having main components of MgO and Al₂O₃, but there is a limitation in that when the content of MnO is greater or less than the presented range, refractory erosion of the temperature holding furnace, for example, melting of MgO, occurs actively and the durability of the temperature holding furnace is degraded.

In order to verify such an influence of MnO in the blocking material to the refractory of the temperature holding furnace, the solubility of MgO in the refractory was measured while removing the Al₂O₃ and changing the MnO content in the blocking material. In this case, the measurement was performed under the temperature condition of 1,500°C and the basicity of the blocking material is 0.95-12, and is performed while changing the MnO content in the range of 10-40 wt%, and the result is as shown in FIG. 2.

Referring to FIG. 2, as the MnO content increases under the above-mentioned conditions, the solubility of MgO in the refractory of the temperature holding furnace shows a tendency of decreasing for a while and then increasing again. At this point, considering that the solubility of MgO is 6-16 wt% when the molten ferro alloy is normally stored and maintained at the temperature holding furnace, it may be understood that when the MnO content in the blocking material is 20-30 wt%, the erosion of the refractory may be reduced.

In addition, In order to verify an influence of Al₂O₃ in the blocking material to the refractory of the temperature holding furnace, the solubility of MgO in the refractory was measured while including 25 wt% of MnO in the blocking material and while changing the Al₂O₃ content. At this point, the experiment was performed under the temperature condition of 1,500°C, and under the condition that the basicity of the blocking material is 0.95-1.2.

Referring to FIG.3, when the MnO content is the same, a tendency is shown in which the greater the Al₂O₃ content, the greater the solubility of MgO. However, considering that the solubility of MgO is 6-16 wt% when the molten ferro alloy is normally stored and maintained at the temperature holding furnace, it may be understood that when the Al₂O₃ content in the blocking material is no greater than 20 wt%, favorably, 8-15 wt%, the erosion of the refractory may be reduced.

Next, the result of an experiment for verifying the nitrogen absorption prevention effect of a blocking material in accordance with an exemplary embodiment will be described.

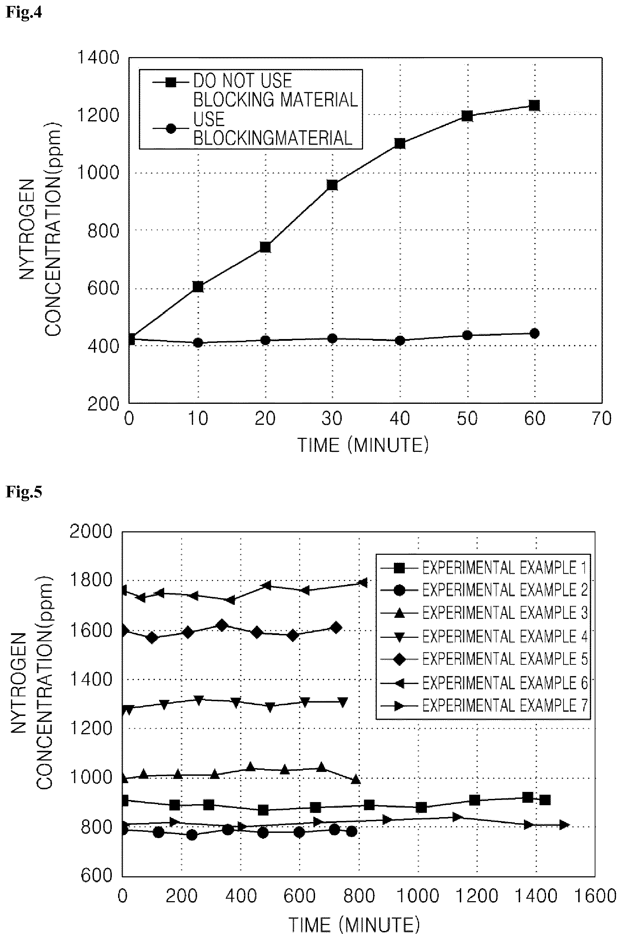

FIG. 4 is a graph illustrating a change in the nitrogen concentration in a molten ferro alloy according to whether to use a blocking material in accordance with an exemplary embodiment, and FIG. 5 is a graph illustrating an experimental result for verifying a nitrogen absorption prevention effect of a blocking material in a method for manufacturing a alloy steel in accordance with an exemplary embodiment.

Firstly, in order to verify the nitrogen absorption prevention effect of a blocking material according to whether to use a blocking material, the following experiment was performed.

A manganese-containing molten ferro alloy was poured in a first temperature holding furnace, and was exposed to an atmosphere of a gas mixture (PN2=0.02 atm) of argon and nitrogen gas for 60 minutes at 1,500°C.

In addition, the manganese-containing molten ferro alloy was poured in a second temperature holding furnace, the blocking material was added into the temperature holding furnace and a blocking material layer was formed on the melt surface of a molten ferro alloy, and then, the resultant was exposed to an atmosphere of a gas mixture (PN2=0.02 atm) of argon and nitrogen gas for 60 minutes at 1,500°C. At this point, the blocking material layer was formed on the melt surface of the molten ferro alloy by using a blocking material which contains 26.0 wt% of CaO, 26.0 wt% of SiO₂, 25 wt% of MnO, 13.0 wt% of Al₂O₃, and 10 wt% of MgO, and the ratio of CaO to SiO₂ (C/S) was 1.

Then, the molten ferro alloy contained in each temperature holding furnace was sampled at an interval of 10 minutes and the nitrogen concentration in the molten ferro alloy was measured, and the result is as shown in FIG. 4.

Referring to FIG. 4, it may be understood that when the melt surface of the molten ferro alloy is exposed as it is to the atmosphere of the gas mixture of argon and nitrogen gas without forming a blocking material layer thereon, the nitrogen concentration in the molten ferro alloy continuously increases as time goes by. Conversely, it may be understood that when the blocking layer is formed on the melt surface of the molten ferro alloy, although the nitrogen concentration in the molten ferro alloy slightly changes as time goes by, the changing degree thereof is very small, and the initial nitrogen concentration in the molten ferro alloy is maintained to be almost constant.

In addition, in order to observe the nitrogen mixing prevention effect when the blocking material was applied to an actual operation, an experiment was performed at a pilot scale (2.0 ton scale). In the experiment, a molten manganese in which 1.4 ton of ferro manganese (FeMn) was melted was charged into a temperature holding furnace, a blocking material was added on the melt surface of a molten manganese and a blocking material is formed, and then, the resultant was maintained at a temperature condition of 1,450-1,550°C and under the atmospheric atmosphere for 700-1,500 minutes.

At this point, the initial nitrogen concentration of the molten manganese is controlled within the range of 800-1,800 ppm so as to secure diversity, and the change in the nitrogen concentration in the molten manganese was measured through continuous sampling and analysis for the maintaining time, and the result is shown in FIG. 5. At this, point, the composition ratio of the blocking material was partially changed according to an initial nitrogen concentration of the molten manganese, and this is shown in following Table 1.

**Table 1**

| | CaO (wt%) | SiO₂ (wt%) | MnO (wt%) | MgO (wt%) | Al₂O₃ (wt%) | C/S | Nitrogen concentration (ppm) |
|---|---|---|---|---|---|---|---|
| Experimental example 1 | 27.4 | 28.5 | 21.1 | 13.9 | 9.1 | 0.96 | 900 |
| Experimental example 2 | 29.5 | 27.8 | 25.1 | 8.1 | 9.5 | 1.06 | 800 |
| Experimental example 3 | 29.5 | 27.8 | 25.1 | 8.1 | 9.5 | 1.06 | 1000 |
| Experimental example 4 | 29.9 | 25.1 | 22.4 | 12.0 | 10.6 | 1.19 | 1300 |
| Experimental example 5 | 27.4 | 28.5 | 21.1 | 13.9 | 9.1 | 0.96 | 1600 |
| Experimental example 6 | 29.5 | 27.8 | 25.1 | 8.1 | 9.5 | 1.06 | 1800 |
| Experimental example 7 | 29.9 | 25.1 | 22.4 | 12.0 | 10.6 | 1.19 | 800 |

Referring to FIG. 5, it may be understood that when a blocking material layer is formed on the melt surface of the molten manganese, mixing of nitrogen into the molten manganese is prevented because the contact between the molten manganese and the air is blocked by the blocking material layer, and the initial nitrogen concentration of the molten manganese are maintained to be constant. In addition, it may be understood that even when an external nitrogen concentration increases, the nitrogen mixing into the molten manganese, which is shielded from the outside by the blocking material layer, is suppressed by the blocking material layer.

Furthermore, it may be understood that even when the composition ratio of the blocking material is partially changed, almost the similar nitrogen absorption prevention effect of using the blocking material layer is exhibited.

Thus, it may be understood that when the molten ferro alloy is maintained in a temperature holding furnace, contact between the molten ferro alloy and the air is blocked when a blocking material layer is formed on the melt surface of the molten ferro alloy, and thus, nitrogen in the air may be prevented from being mixed into the molten ferro alloy.

While the technical idea of the present invention has been specifically described in accordance with the above embodiments, it should be noted that the foregoing embodiments are provided only for illustration while not limiting the present disclosure. In addition, various embodiments may be provided to allow those skilled in the art to understand the scope of the preset invention.

### INDUSTRIAL APPLICABILITY

A blocking material and a method for manufacturing alloy steel using the same in accordance with exemplary embodiments secure cleanliness of alloy steel and may omit a post-process or reduce the time spent for the post-process, and thus may improve the productivity of the alloy steel.

## Claims

1. A blocking material, which is added to a melt surface of a manganese-containing molten ferro alloy and covers the melt surface of the molten ferro alloy, comprising, with respect to the total of 100 wt%,
37-66 wt% of CaO and SiO₂, 8-15 wt% of Al₂O₃, 6-18 wt% of MgO, and 20-30 wt% of MnO, wherein
CaO and SiO₂ are included so that the ratio of CaO to SiO₂ (CaO/SiO₂) is in a range of 0.95-1.2.

2. A method for manufacturing alloy steel, the method comprising:
preparing a molten ferro alloy; preparing a blocking material;
adding the blocking material into the molten ferro alloy and forming a blocking material layer on a melt surface of the molten ferro alloy;
maintaining the molten ferro alloy at a temperature of at least the melting point of the ferro alloy; and
mixing the molten ferro alloy and the molten steel to manufacture alloy steel.

3. The method of claim 2, wherein the preparing of the molten ferro alloy comprises:
melting a ferro alloy in a melting furnace to manufacture the molten ferro alloy; and
pouring the molten ferro alloy into a temperature holding furnace.

4. The method of claim 2, wherein the preparing of the molten ferro alloy comprises:
charging a molten steel into a temperature holding furnace; and
adding at least any one of a ferro alloy or a molten ferro alloy into the temperature holding furnace.

5. The method of claim 2, wherein in the preparing of a blocking material, the blocking material is prepared which includes, with respect to a total of 100 wt%,
37-66 wt% of CaO and SiO₂, 8-15 wt% of Al₂O₃, 6-18 wt% of MgO, and 20-30 wt% of MnO, wherein
the ratio of CaO to SiO₂ (CaO/SiO₂) is in a range of 0.95-1.2.

6. The method of claim 5, wherein the blocking material is added in any one state of a solid phase or a liquid phase.

7. The method of claim 6, wherein the maintaining the molten ferro alloy at a temperature of at least a melting point of the ferro alloy is performed in a range of 1,450-1,550°C.

8. The method of claim 7, wherein in the forming of a blocking material layer on a melt surface of the molten ferro alloy,
the blocking material layer is formed on an entirety of the melt surface of the molten ferro alloy so that nitrogen in the air is prevented from being mixed into the molten ferro alloy due to contact between the molten ferro alloy and the air.
